# FASCICULE DE BREVET EUROPEEN

(11) **EP 1 441 020 B1**
(45) Date de publication et mention de la délivrance du brevet: **14.03.2007**
(21) Numéro de dépôt: 04290126.4
(22) Date de dépôt: 16.01.2004
(51) Int. Cl.: C09K 17/06

(54) **Composition d'un stabilisant pour sols**
Bodenvervestigungszusammensetzung
composition of soil stabiliser

(30) Priorité: 16.01.2003 FR 0300581
(43) Date de publication de la demande: 28.07.2004
(73) Titulaire: A.R.D. S.A.R.L., 14200 Herouville-Saint-Clair (FR)
(72) Inventeur: Dhervilly, Philippe, 14280 Saint-Contest (FR); Lemee, Frédéric, 14000 Caen (FR)
(74) Mandataire: Saint-Marc-Etienne, Christophe Andréas

(56) Documents cités:
- FR-A- 1 196 032
- GB-A- 849 234
- US-A- 4 871 283
- US-A- 5 201 608
- US-A- 5 468 277
- US-A- 5 951 751

## Description

La présente invention concerne une composition d'un stabilisant pour sols et, en particulier, pour sols fins de type piétonnier ou pour véhicules légers ainsi qu'un liant pour une composition d'un stabilisant pour sols.

Pour la réalisation de tels sols, il est connu de retirer à l'endroit voulu la croûte superficielle du terrain par des travaux de terrassement et de combler l'emplacement dégagé avec un stabilisant destiné à supporter un trafic.

Un tel stabilisant est constitué classiquement d'une charge et d'un liant.

Comme charge, on peut utiliser des matériaux inertes provenant de carrières, par exemple de la grave à base de calcaire. Le liant est classiquement constitué d'un assemblage de matières pouzzolaniques et d'activateurs.

Comme matières pouzzolaniques, on peut utiliser des cendres volantes provenant, par exemple, de centrales thermiques et comme activateur, on peut utiliser de la chaux.

Pour des raisons économiques et pour des raisons liées à la préservation de l'environnement, il est apparu intéressant de chercher à concevoir une composition d'un stabilisant pour sols qui puisse incorporer des matériaux à prix de revient très bas ou des matériaux considérés comme des résidus ou des déchets.

Le but de l'invention est donc de répondre à cette attente.

Les caractéristiques de l'invention mentionnées ci-dessous, ainsi que d'autres, apparaîtront plus clairement à la lecture de la description suivante d'un exemple de réalisation.

Ainsi, on utilise des sédiments comme charge du stabilisant pour sols, constitués par des boues d'estuaires.

La granulométrie de ces sédiments est de préférence inférieure ou égale à 200 microns pour 90 % des particules entrant dans sa composition.

A ces sédiments, est incorporé un liant constitué d'un assemblage de matières pouzzolaniques avec au moins un activateur. Le liant peut incorporer éventuellement un régulateur de prise.

Les matières pouzzolaniques sont constituées par des cendres provenant de la combustion de matériaux fossiles par un procédé dit à lit fluidisé circulant (LFC) à basse température de l'ordre de 850°C et à combustion lente qui permet de réduire le rejet de gaz à effet de serre dans l'atmosphère tel que des monoxydes de carbone, des dioxydes de carbone ou des oxydes d'azote. Ces cendres sont susceptibles d'être produites à partir de combustibles à faible pouvoir calorifique, par exemple des terrils.

De telles cendres ont une composition essentiellement silico-alumineuse qui concoure à l'obtention de bonnes caractéristiques mécaniques au stabilisant pour sols après durcissement. Ces cendres possèdent également une finesse élevée de l'ordre de 10 000 cm²/g permettant de remplir les interstices de la charge dans laquelle elles sont incorporées, pour obtenir une importante surface de contact avec la charge afin de favoriser le développement de ponts pouzzolaniques. De telles cendres sont connues sous l'appellation commerciale : SODELINE ®.

D'autres matières pouzzolaniques telles que des matériaux fins réactifs de nature siliceuse, silico-alumineuse ou silico-calcaire issus de sous-produits de l'industrie sont également utilisées en proportion minoritaire. Ces matériaux complémentaires sont des boues industrielles, des cendres diverses, des laitiers ou bien encore des déchets industriels banals.

La proportion de matières pouzzolaniques incorporée dans la composition dépend de la nature de la charge à stabiliser et de son potentiel de réactivité. En effet, certaines charges comportent des éléments suffisamment divisés pour réagir avec les activateurs employés.

Compte tenu du fort pouvoir absorbant des cendres volantes utilisées, un dosage plus important en cendres dans la composition peut s'avérer intéressant lors de la stabilisation d'une charge fortement imbibée d'eau.

Avantageusement, l'apport de cendres volatiles représente entre 2 % et 15 % de la masse de la charge.

L'activateur utilisé pour développer une réaction avec les cendres est choisi seul ou en combinaison parmi les produits suivants: chaux vive ou éteinte, métaux alcalins, en particulier, hydroxydes de sodium, de potassium, de lithium, d'aluminium, de calcium ou du ciment. Ces produits peuvent provenir de déchets fournis par l'industrie lourde.

L'incorporation de l'activateur permet d'élever le pH de la composition en dissolvant les éléments siliceux et alumineux compris dans les matériaux pouzzolaniques d'apport ainsi que dans les sédiments. La dissolution de ces éléments réactifs favorise l'obtention de performances mécaniques élevées de la composition.

Avantageusement, l'activateur choisi est de la chaux car, outre son faible prix de revient, la chaux permet l'élévation du pH jusqu'à une valeur de 12.7. L'incorporation de métaux alcalins tels que la soude caustique ou la potasse permet d'augmenter encore la valeur du pH.

La proportion de l'activateur incorporée dans la composition dépend de la concentration de l'activateur et du potentiel de réactivité de la charge à traiter. Avantageusement, l'apport de l'activateur représente entre 0.5 et 5 % de la masse de la charge et avantageusement entre 1 % et 2 %.

Lorsque les concentrations d'équilibre en ions silicates et aluminates sont atteintes dans la composition, les sels dissouts précipitent et forment des cristaux ou gels de silicates et aluminates de calcium hydratés.

Un régulateur de prise peut être incorporé au liant pour ralentir ou accélérer la prise et le durcissement de la composition. Le régulateur est avantageusement constitué par un sulfate de calcium tel que le gypse. D'autres constituants tels que du chlorure de calcium, du chlorure de sodium, du carbonate de calcium peuvent également être employés, soit en complément du gypse ou en remplacement de celui-ci.

Le régulateur de prise est utilisé dans la majorité des cas pour ralentir la formation de ponts pouzzolaniques de manière à permettre la préparation et la dépose du stabilisant avant qu'intervienne son durcissement. L'incorporation de ce régulateur de prise permet ainsi de retravailler le stabilisant après sa dépose sur le terrain et lui confère également un caractère d'auto-réparation.

La proportion de régulateur qu'il peut être utile d'incorporer à la composition est comprise entre 0.05 % et 1 % de la masse de la charge.

La composition d'un stabilisant pour sols de l'invention permet ainsi de valoriser des matériaux considérés jusqu'alors comme des déchets ou des résidus.

Elle convient, en particulier, pour la constitution de chemins piétonniers ou pour des routes destinées à la circulation de véhicules légers ou à faible trafic.

Elle convient pour la constitution de couches de surface et/ou de couches de soubassement de sols.

La valeur de résistance à la compression peut atteindre 2 Mpa au terme d'un délai de 14 jours après la réalisation de la composition.

La fabrication de la composition peut être réalisée, en particulier, suivant les deux procédés suivants.

Dans le premier procédé et dans un premier temps, le liant est assemblé industriellement sous une forme pulvérulente. Ses constituants, matières pouzzolaniques, activateurs et éventuellement régulateurs de prise, sont à cet effet, déshydratés, mélangés et conditionnés, par exemple, en sac ou dans une citerne à pulvérulent.

Dans un second temps, le liant est incorporé à la charge, par exemple, par une opération de malaxage dans une centrale routière. Le liant est alors activé par hydratation, puis la composition est épandue puis compactée. Dans une variante de fabrication, le liant peut être épandu sur la charge en place puis la composition est malaxée, par exemple, par un engin de type rotavator, l'activation du liant se faisant par hydratation. Ce premier procédé convient pour des chantiers courants.

Dans le second procédé, convenant pour des chantiers de plus grande importance, les constituants du liant peuvent pour des raisons économiques, être mélangés sur le site de fabrication de la composition. On peut ainsi faire l'économie de l'étape de déshydratation évoquée dans le premier procédé. L'incorporation du liant à la charge est réalisée de la même manière que dans le premier procédé.

## Revendications

1. Composition destinée à la fabrication d'un stabilisant pour sols, la composition incorporant une charge constituée de sédiments, un liant constitué par un assemblage de matières pouzzolaniques avec au moins un activateur, **caractérisée en ce que** ladite charge est constituée de boues d'estuaire, les matières pouzzolaniques dudit liant sont constituées de cendres provenant de la combustion de matériaux fossiles par un procédé dit à lit fluidifié circulant (LFC) et incorporent au moins un matériau choisi parmi des boues industrielles, d'autres types de cendres, des laitiers ou des déchets industriels banals.

2. Composition selon la revendication 1, **caractérisée en ce que** la granulométrie des sédiments de ladite charge est inférieure ou égale à 200 microns pour 90 % des particules entrant dans sa composition.

3. Composition selon la revendication 1 ou 2, **caractérisée en ce que** la proportion des cendres incorporée à la composition est comprise entre 2 % et 15 % de la masse de la charge.

4. Composition selon l'une des revendications 1 à 3, **caractérisée en ce que** la proportion de l'activateur incorporée à la composition est comprise entre 0,5 % et 5 % de la masse de la charge.

5. Composition selon l'une des revendications précédentes, **caractérisé en ce que** l'activateur est choisi seul ou en combinaison parmi la chaux vive ou éteinte, les hydroxydes de métaux alcalins, l'hydroxyde d'aluminium, le ciment.

6. Composition selon l'une des revendications précédentes, **caractérisée en ce que** les hydroxydes de métaux alcalins sont choisis parmi les hydroxydes de sodium, de potassium, de lithium.

7. Composition selon l'une des revendications précédentes, **caractérisée en ce que** ledit liant incorpore un régulateur de prise pour ralentir ou accélérer la prise et le durcissement de la composition.

8. Composition selon la revendication 7, **caractérisée en ce que** ledit régulateur de prise comprend au moins un constituant choisi parmi le sulfate de calcium, le chlorure de calcium, le chlorure de sodium, le carbonate de calcium.

9. Composition selon la revendication 7 ou 8, **caractérisée en ce que** la proportion dudit régulateur de prise incorporée à la composition est comprise entre 0.05 % et 1 % de la masse de la charge.

## Claims

1. Composition designed for the production of a stabiliser for soils, the composition incorporating a filler constituted by sediments, a binder constituted by an assembly of pozzuolanic materials with at least one activator, **characterised in that** said filler is constituted by estuary muds, the pozzuolanic materials of said binder are constituted by ashes from the combustion of fossil materials by a so-called circulating fluidised bed process and incorporate at least one material selected from industrial muds, other types of ashes, slags or commonplace industrial waste.

2. Composition according to claim 1, **characterised in that** the grain size of the sediments of said filler is less than or equal to 200 microns for 90% of the particles in its composition.

3. Composition according to claim 1 or 2, **characterised in that** the proportion of the ashes incorporated in the composition is between 2% and 15% of the mass of the filler.

4. Composition according to one of claims 1 to 3, **characterised in that** the proportion of the activator incorporated in the composition is between 0.5% and 5% of the mass of the filler.

5. Composition according to one of the preceding claims, **characterised in that** the activator is selected on its own or in combination from unslaked or slaked lime, alkaline metal hydroxides, aluminium hydroxide, cement.

6. Composition according to one of the preceding claims, **characterised in that** the alkaline metal hydroxides are selected from the hydroxides of sodium, of potassium, of lithium.

7. Composition according to one of the preceding claims, **characterised in that** said binder incorporates a setting regulator to slow or accelerate the setting and the hardening of the composition.

8. Composition according to claim 7, **characterised in that** said setting regulator comprises at least one constituent selected from calcium sulphate, calcium chloride, sodium chloride, calcium carbonate.

9. Composition according to claim 7 or 8, **characterised in that** the proportion of said setting regulator incorporated in the composition is between 0.05% and 1% of the mass of the filler.

## Patentansprüche

1. Zusammensetzung zur Herstellung eines Stabilisators für Böden, wobei die Zusammensetzung einen aus Sedimenten bestehenden Füllstoff und ein aus einer Zusammenstellung von puzzolanischen Materialien mit wenigstens einem Aktivierungsmittel bestehenden Bindemittel umfasst,
**dadurch gekennzeichnet, dass**
der Füllstoff aus Mündungsschlämmen besteht, die puzzolanischen Materialien des Bindemittels aus Asche, die aus der Verbrennung von fossilen Materialien mittels eines Fließbettverfahrens (LFC) stammen, besteht und wenigstens ein Material enthält, das aus Industrieschlämmen, anderen Arten von Asche, Schlacke oder allgemeinem Industriemüll ausgewählt wird.

2. Zusammensetzung nach Anspruch 1,
**dadurch gekennzeichnet, dass**
die Korngrößenbestimmung der Sedimente des Füllstoffes für 90% der Partikel, die in seine Zusammensetzung gelangen, kleiner oder gleich 200 Mikrometer ist.

3. Zusammensetzung nach Anspruch 1 oder 2,
**dadurch gekennzeichnet, dass**
der Anteil der in die Zusammensetzung eingebrachten Asche zwischen 2% und 15% der Masse des Füllstoffes beträgt.

4. Zusammensetzung nach einem der Ansprüche 1 bis 3,
**dadurch gekennzeichnet, dass**
der Anteil des in die Zusammensetzung eingebrachten Aktivierungsmittels zwischen 0,5% und 5% der Masse des Füllstoffes beträgt.

5. Zusammensetzung nach einem der vorhergehenden Ansprüche,
**dadurch gekennzeichnet, dass**
das Aktivierungsmittel einzeln oder in Kombination aus Kalziumhydroxid oder Löschkalk, Alkalimetall-Hydroxide, Aluminiumhydroxid, Zement ausgewählt wird.

6. Zusammensetzung nach einem der vorhergehenden Ansprüche,
**dadurch gekennzeichnet, dass**
die Alkalimetall-Hydroxide aus Natriumhydroxid, Kaliumhydroxid, Lithiumhydroxid ausgewählt werden.

7. Zusammensetzung nach einem der vorhergehenden Ansprüche,
**dadurch gekennzeichnet, dass**
das Bindemittel ein Mittel zur Regulierung der Abbindung umfasst, um das Abbinden und das Härten der Zusammensetzung zu verlangsamen oder zu beschleunigen

8. Zusammensetzung nach Anspruch 7,
**dadurch gekennzeichnet, dass**
das Mittel zur Regulierung der Abbindung wenigstens einen Bestandteil umfasst, der aus Kalziumsulfat, Kalziumchlorid, Natriumchlorid, Kalziumcarbonat ausgewählt wird.

9. Zusammensetzung nach Anspruch 7 oder 8,
**dadurch gekennzeichnet, dass**
der Anteil des in die Zusammensetzung eingebrachten Mittels zur Regulierung der Abbindung zwischen 0,05% und 1% der Masse des Füllstoffes beträgt.
